# EUROPEAN PATENT APPLICATION

(11) **EP 1 182 530 A1**
(43) Date of publication of application: **27.02.2002**
(21) Application number: 01306982.8
(22) Date of filing: 17.08.2001
(51) Int. Cl.: G05D 7/01

(54) **Valve apparatus**

(30) Priority: 23.08.2000 GB 0020651
(71) Applicant: Lucas Industries Limited, West Midlands B90 4LA (GB)
(72) Inventor: Hankin, Alon G.S., Solihull, West Midlands B90 2QN (GB)
(74) Representative: Carpenter, David

(57) **Abstract**

A valve apparatus comprising a housing (3), a piston (2) mounted in the housing for movement between positions corresponding to open and closed conditions of the valve, actuator means (16) movable by the piston and extending through an opening (17) in the housing for actuating a device disposed externally of the housing, and biasing means (18) arranged to transmit a biasing force between the piston (2) and the actuator means (16) so as to mitigate movement of the actuator means relative to the housing when the valve is in a predetermined operating condition. In a preferred embodiment, the valve apparatus includes a debris shield (22, 23) arranged to close said opening (17) around the actuator means (16) when the valve is in a predetermined operating condition.

## Description

### Background of the Invention

This invention relates to a valve apparatus of the type having a housing, a piston mounted in the housing for movement between positions corresponding to open and closed conditions of the valve, and actuator means moveable by the piston and extending through an opening in the housing for actuating a device disposed externally of the housing.

A valve apparatus of the above-mentioned type may, for example, be used as a pressure raising valve to ensure that general system pressure in a flow metering unit of an engine is maintained at a desired level by restricting flow through an orifice. The external device may, for example, be a microswitch device activatable by the actuator means, for signalling an electronic control unit that the valve is in a predetermined operating condition.

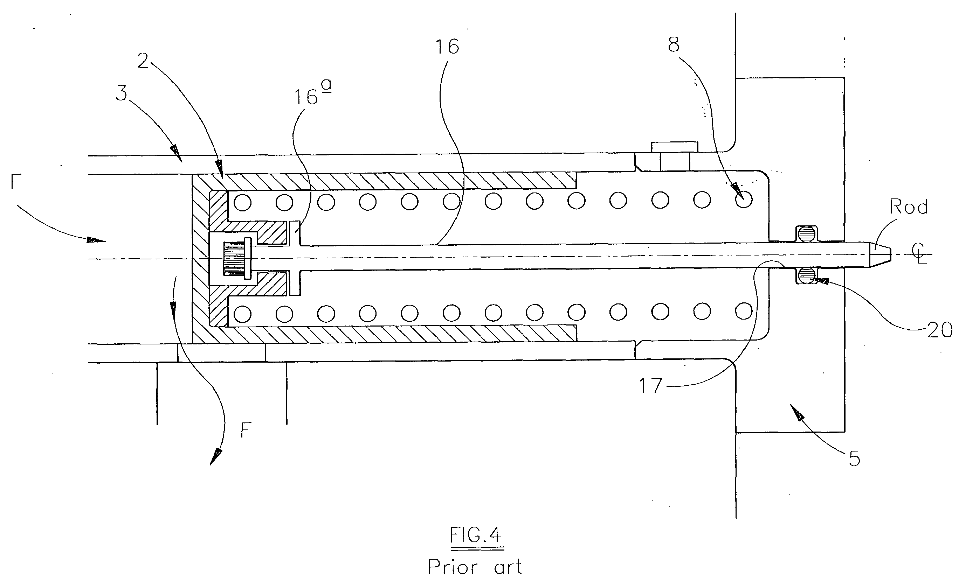

A known valve apparatus of the above-mentioned type is shown in Figure 4. In use, with the valve apparatus of Figure 4 in an open condition, the actuator means, in the form of a pushrod 16, tends to move together with a valve piston 2. The piston 2 can move the pushrod towards the right in the orientation shown in Figure 4 by abutment of the piston 2 against a laterally extending abutment 16a of the actuator means, and the pushrod 16 is returnable towards the left in the orientation shown in Figure 4 by a spring of an external microswitch device ( not shown) connected to the pushrod externally of the valve, and a compression spring 8 acting between the piston 2 and its supporting housing 3.

It is known, as shown in Figure 4, to provide a seal 20 between the pushrod 16 and the end wall 5 of the housing 3 within the opening 17 through which the push rod 16 extends to co-operate with the microswitch, the seal 20 preventing leakage of fuel from within the valve housing 3. However, such seals can abrade in use, causing undesirable leakage of fuel from the valve housing.

The applicant has identified that frequent reciprocation of the actuator means in use can be problematic. For example, it can be a significant factor in seal abrasion. Debris from within the housing, deposited in the opening in the area of the seal, is also thought to exacerbate abrasion of the seal material.

An object of the invention is to reduce the frequency of reciprocation of the actuator means, in use.

A further object of the invention is to prevent or reduce the egress of debris from the housing into the opening.

### Summary of the Invention

In accordance with the invention, a valve apparatus is provided comprising a housing, a piston mounted in the housing for movement between positions corresponding to open and closed conditions of the valve, actuator means moveable by the piston and extending through an opening in the housing for actuating a device disposed externally of the housing, and biasing means arranged to transmit a biasing force between the piston and the actuator means so as to mitigate movement of the actuator means relative to the housing when the valve is in a predetermined operating condition.

Preferably said actuator means has an abutment portion arranged so as to be biased by the biasing means into abutment with a portion of the housing in the predetermined operating condition of the valve.

Desirably said abutment portion comprises a surface which abuts a surface of the housing around the opening in the predetermined operating condition of the valve, for closing said opening.

Conveniently said biasing means allows a predetermined amount of lost motion between the actuator means and the piston.

Preferably, the valve apparatus further comprises a debris shield arranged to close said opening around the actuator means when the valve is in a predetermined operating condition.

Preferably said debris shield comprises a surface which abuts a surface of the housing around the opening in the predetermined operating condition of the valve, for closing said opening.

In accordance with another aspect of the invention, a valve apparatus is provided comprising a housing, a piston mounted in the housing for movement between positions corresponding to open and closed conditions of the valve, actuator means movable by the piston and extending through an opening in the housing for actuating a device disposed externally of the housing, and a debris shield arranged to close said opening around the actuator means when the valve is in a predetermined operating condition.

Preferably said debris shield comprises a surface which abuts a surface of the housing around the opening in the predetermined operating condition of the valve, for closing said opening.

Conveniently the valve apparatus includes biasing means for biasing the debris shield into abutment with the housing.

Desirably the debris shield is fixed for movement with the actuator means, and the biasing means is arranged to transmit a biasing force between the piston and the actuator means so as to mitigate movement of the actuator means relative to the housing when the debris shield abuts the housing.

Desirably said biasing means allows a predetermined amount of lost motion between the actuator means and the piston.

Preferably said housing further includes a boss extending internally of the housing from an internal face of the housing and around said opening, so as to provide support for the actuator means.

### Brief Description of the Drawings

In order that the invention may be better understood, two embodiments thereof will now be described, by way of example only, with reference to the accompanying drawings, in which:
Figure 1 is a schematic drawing showing a valve apparatus;
Figure 1a is a schematic drawing showing a modified valve apparatus;
Figure 2 is a schematic drawing showing an alternative valve apparatus;
Figure 3 is a schematic drawing showing an external device in the form of a microswitch operable by actuator means of the valve apparatus; and
Figure 4 shows a known valve apparatus.

### Detailed Description of the Invention

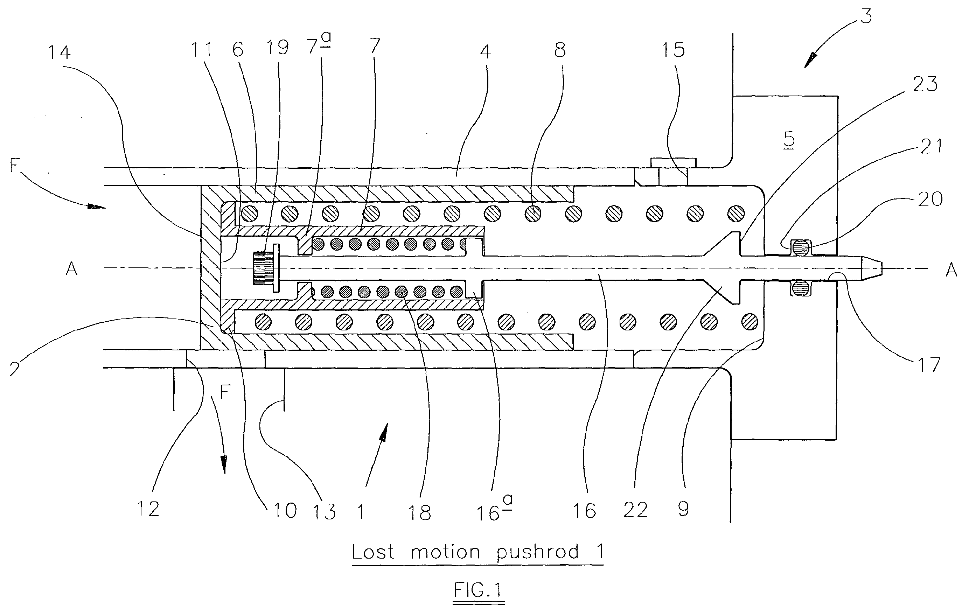

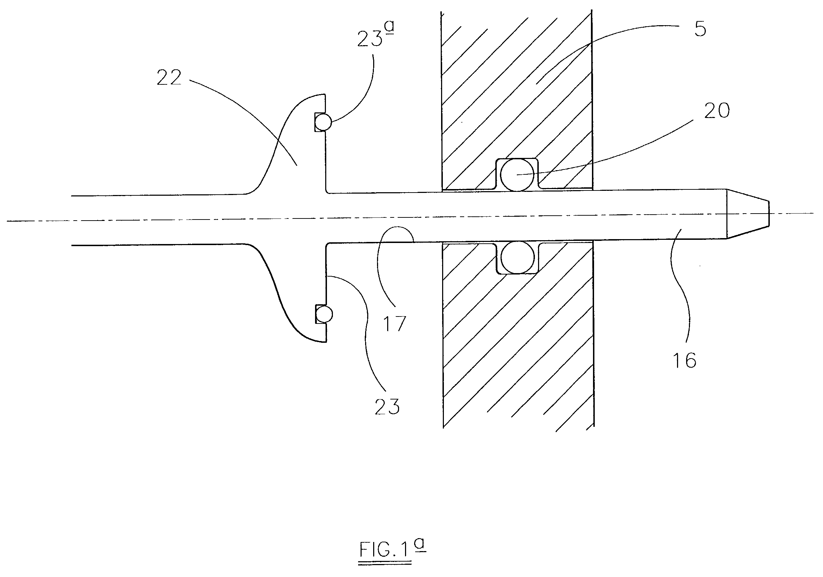

Referring to Figure 1, a proportional control valve apparatus in the form of a pressure raising valve 1 comprises a piston 2 mounted in a valve housing 3. The valve housing 3 comprises an axially extending generally tubular body portion 4 and an end closure 5. The piston 2 comprises a substantially cylindrical piston body portion 6 defining an internal cavity in which a piston insert 7 is disposed. A primary spring 8 is disposed internally of the valve 1 between an internal face 9 of the closure 5 and a laterally extending portion 10 of the piston insert 7. The primary spring 8 biases the piston insert against an internal face 11 of the piston body 6 and away from the internal face 9 of the closure 5.

The housing portion 4 is provided with an orifice 12 aligned with a flow passage 13. In use, movement of the piston towards and away from the end face 9 so as to restrict the orifice 12 can be used to lower and raise the pressure of a fluid F flowing through a flow metering unit of which the flow passage 13 forms a part.

A further orifice 15 is provided in the valve housing for supplying fluid under controlled pressure into the housing 3 to assist the primary spring 8.

Force tending to move the piston 2 towards the open condition (towards the right in the orientation shown in Figure 1) is provided by the pressure of fluid F acting against an external face 14 of the piston 2. Force tending to move the piston 2 towards the closed condition (towards the left in the orientation shown in Figure 1) is provided by a combination of the biasing force exerted by the primary spring 8 away from the internal wall 9, a force exerted by a device external to the valve (as will be described in further detail below), and pressurised fluid acting on the internal face 11 of the piston 2.

The valve apparatus 1 further comprises actuating means in the form of a rod 16 which extends through an opening 17 in the housing end closure 5, for actuating the external device. Also, the insert 7 has a substantially cylindrical portion which extends in a direction axially away from the inner face 11 of the piston body 6 and is concentrically disposed about an end portion of the rod 16 (the left hand end in the orientation shown in Figure 1).

Biasing means in the form of a secondary spring 18 is provided in an annulus between the cylindrical portion of the piston insert 7 and the rod 16 for biasing the rod 16 away from the piston 2 towards the end closure 5. The secondary spring 18 engages a radially inwardly extending abutment portion 7a of the piston insert 7 and a radially outwardly extending abutment portion 16a of the rod 16. In use, force is transmitted from the piston 2 through the secondary spring 18 to the rod 16 for moving the rod 16 axially towards the end closure 5 (the open condition of the valve 1).

To prevent fluid escaping from the housing 3 through the opening 17, an annular seal 20 is disposed between the housing 3 and the rod 16 in an annular recess 21 within the opening 17 so as to slidingly seal the interface of the rod 16 and the opening 17. A debris shield is provided in the form of a radially extending portion 22 of the rod 16 having a substantially planar surface 23. The surface 23 is arranged to abut the internal surface 9 of the end closure 5 under the biasing force of the secondary spring 18 when the valve 1 is in the open condition, thereby shielding the opening 17.

The substantially planar surface 23 shown in Figure 1 may be replaced by a surface 23 carrying a sealing member 23a as shown in Figure 1a for engaging the internal face 9 to better ensure debris is excluded from the seal 20 within the opening 17. The sealing member 23a is a substantially annular member housed in a correspondingly shaped groove in the planar surface 23 and may be bonded to the rod portion 22.

Retaining means in the form of a nut and washer 19 are provided at the inner end of the rod internally (to the left in the orientation shown in Figure 1) of the piston insert abutment portion 7a for retaining the rod 16 in the piston insert 7. Although a nut and washer are shown for this application, other means, such as a spring clip, could also be used. A small amount of free play is provided between the portion 7a and the rod 16 to provide alignment tolerance. The laterally extending abutment portion 16a of the rod 16 serves to facilitate alignment of the rod 16 within the valve 1 and to support and guide the rod 16 for axial movement relative to the piston insert 7.

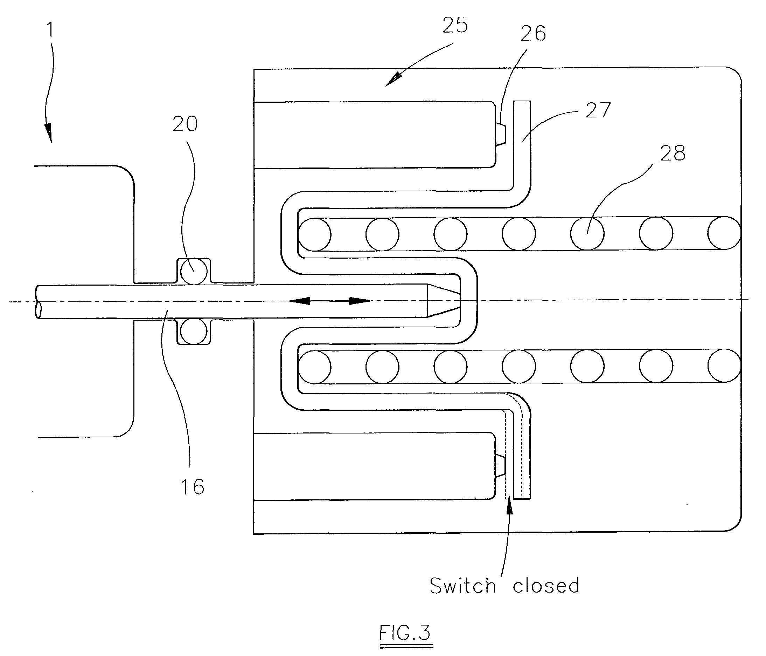

The rod 16 is arranged to actuate an external device, which may be a microswitch device 25, as shown in Figure 3. In this manner, information can be passed to electronic control means regarding the condition of the valve 1. The microswitch device 25 of Figure 3 comprises a first contact 26, and a second contact 27 biased by a spring 28 towards a switch closed position shown in broken lines in the lower portion of Figure 3.

When the valve 1 is in its closed condition, the piston 2 is disposed further to the left than shown in Figure 1, closing the orifice 12 and preventing flow of fluid from the body portion 4 through the orifice 12 to the passage 13 is closed. In this condition the primary spring 8, the secondary spring 18 and the microswitch spring 28 are relatively relaxed and the microswitch is closed. When the pressure of fluid F increases, the piston 2 starts to move towards the right in Figure 1 against the resilient biasing force of the primary spring 8, the microswitch spring 28 and the controlled force exerted by pressurized fluid inside the housing 3. The position of the piston 2 for any given pressure of the fluid F can be controlled by controlling the pressure of fluid supplied into the housing 3 through orifice 15 to move the valve 1 in a desired direction.

The secondary spring 18 is designed to provide relatively weak resistance in this condition, so as to give some lost motion between the piston 2 and the rod 16 as the valve starts to open. However, in the partially open condition of the valve, as shown in Figure 1, the secondary spring 18 is stressed sufficiently to drive the rod 16 against the external microswitch spring 28. As the rod 16 starts to move with the piston 2 towards the open condition of the valve 1, the rod 16 moves the second contact 27 axially into the switch open position as shown in unbroken lines in Figure 3.

The piston 2 continues to drive the rod 16 to the right in the orientation shown in Figure 1 carrying microswitch contact 27 with it until abutment surface 23 closes against end closure surface 9, thereby closing the opening 17. The piston 2 can be driven further to the right in the orientation shown in Figure 1 against both primary and secondary springs 8, 18, causing the secondary spring 18 to compress, thereby biasing the surface 23 with greater force against the surface 9. The piston 2 can now reciprocate between various axial positions in the open condition of the valve 1 without moving the rod 16, provided the secondary spring maintains the rod surface 23 in abutment with the housing surface 9. The rod 16 thus remains in a substantially fixed position relative to the end closure 5. This prevents reciprocation of the rod 16 causing wear to the seal 20, and at the same time prevents debris entering the area of the seal 20, when the valve is in the open condition.

When the pressure of fluid F reduces, the forces of the primary and secondary springs 8, 18 and microswitch spring 28 combine with the force applied by the fluid supplied through orifice 15 to return the piston 2 towards the closed condition.

If the valve 1 is used, for example, in a fuel supply system of an aircraft, the rod 16 will normally only need to move once per flight. This provides significant improvements in safety and reliability of the seal 20.
Furthermore, the debris shield 22 functions to mitigate the entrance of debris into the area of the seal 20 in-flight, further improving safety and reliability.

Furthermore, in use with the valve fully open, a unidirectional load is applied to the valve components. In particular there is no frequent load reversal. This discourages particulate debris liberation which may be caused by fretting, for example between the rod 16 and abutment portion 7a.

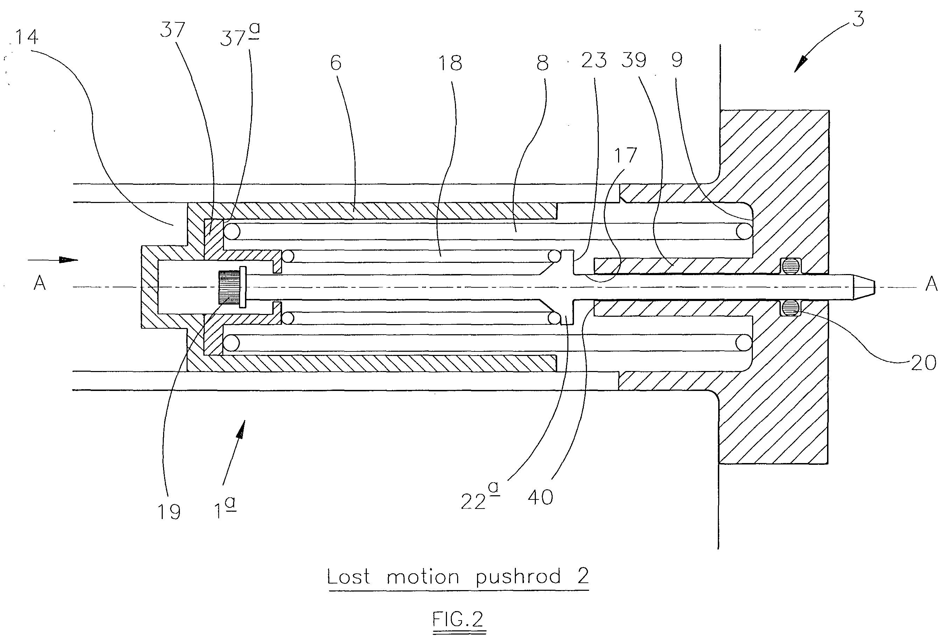

Figure 2 shows another pressure raising valve 1a. The construction and operation of the valve 1a is similar in many respects to that of the valve 1 described above. Items in valve 1a which perform a similar function to corresponding items in valve 1 are provided with identical reference numerals, and to avoid duplication of effort are not described again in detail. Also, the valve orifices 15 and 12 have been omitted from Figure 2 for convenience.

As seen in Figure 2, a modified piston insert 37 is provided, and the secondary spring 18 is not housed within a cylindrical portion of the piston insert 37, but instead abuts an end face 37a of the piston insert 37. An opposite end of the secondary spring 18 abuts one axial side surface of a laterally extending abutment 22a of the rod 36. An opposite side surface of the abutment 22a provides the surface 23 for closing the opening 17.

It can also be seen from Figure 2 that the housing 3 includes a boss 39 which extends internally of the housing from the internal face 9 of the housing. The boss 39 also extends around the opening 17, enabling the surface 23 to close the opening 17 by mating against an annular end surface 40 of the boss 39.

The boss 39 provides increased lateral support for the rod 36, whilst providing a greater degree of lateral freedom for the laterally extending abutment 22a of the rod 36, thereby facilitating the avoidance of snagging by the abutment 22a against the piston insert.

## Claims

1. A valve apparatus comprising a housing (3), a piston (2) mounted in the housing for movement between positions corresponding to open and closed conditions of the valve, actuator means (16) movable by the piston (2) and extending through an opening (17) in the housing for actuating a device disposed externally of the housing, and **characterised by** biasing means (18) arranged to transmit a biasing force between the piston (2) and the actuator means (16) so as to mitigate movement of the actuator means relative to the housing when the valve is in a predetermined operating condition.

2. A valve apparatus as claimed in claim 1, **characterised in that** the actuator means (16) has an abutment portion (22, 23) arranged so as to be biased by the biasing means (18) into abutment with a portion (5, 9) of the housing in the predetermined operating condition of the valve.

3. A valve apparatus as claimed in claim 2, **characterised in that** the abutment portion comprises a surface (23) which abuts a surface (9) of the housing around the opening (17) in the predetermined operating condition of the valve, for closing said opening (17).

4. A valve apparatus as claimed in any one of the preceding claims, **characterised in that** the biasing means (18) allows a predetermined amount of lost motion between the actuator means (16) and the piston (2).

5. A valve apparatus as claimed in claim 1, further **characterised by** a debris shield (22, 23) arranged to close said opening (17) around the actuator means (16) when the valve is in a predetermined operating condition.

6. A valve apparatus as claimed in claim 5, **characterised in that** the debris shield comprises a surface (23) which abuts a surface (9) of the housing around the opening (17) in the predetermined operating condition of the valve, for closing said opening (17).

7. A valve apparatus as claimed in claim 5 or 6, further **characterised in that** the biasing means (18) is arranged to bias the debris shield (22, 23) into abutment with the housing.

8. A valve apparatus as claimed in claim 7, **characterised in that** the debris shield (22, 23) is fixed for movement with the actuator means (16), and the biasing means (18) is arranged to transmit a biasing force between the piston (2) and the actuator means (16) so as to mitigate movement of the actuator means (16) relative to the housing (3) when the debris shield (22, 23) abuts the housing.

9. A valve apparatus as claimed in any one of the preceding claims, **characterised in that** the housing (3) further includes a boss (39) extending internally of the housing (3) from an internal face (9) of the housing and around said opening (17), so as to provide support for the actuator means (16).
